# EUROPEAN PATENT APPLICATION

(11) **EP 4 664 950 A1**
(43) Date of publication of application: **17.12.2025**
(21) Application number: 24763098.1
(22) Date of filing: 26.02.2024
(51) Int. Cl.: H04W 8/14

(54) **CROSS-DOMAIN COMMUNICATION METHOD AND COMMUNICATION DEVICE**

(30) Priority: 01.03.2023 CN 202310231108
(71) Applicant: Huawei Technologies Co., Ltd., Shenzhen, Guangdong 518129 (CN)
(72) Inventor: YU, Youyang, Shenzhen, Guangdong 518129 (CN); LI, Hancheng, Shenzhen, Guangdong 518129 (CN); ZHOU, Han, Shenzhen, Guangdong 518129 (CN); WU, Wenfu, Shenzhen, Guangdong 518129 (CN)
(74) Representative: Isarpatent
(86) International application number: PCT/CN2024/078624
(87) International publication number: WO 2024/179416

(57) **Abstract**

This application relates to a cross-domain communication method and a communication device. In the method, a first SMF determines, based on a group identifier of a group to which a target user equipment belongs, a first UPF connected to a first user equipment, where the first user equipment is an access point user equipment in the group; the first SMF sends an IP address of the target user equipment and/or the group identifier to the first UPF; and the first UPF establishes a GTP-U tunnel between the first UPF and the second UPF, and stores a correspondence between the IP address and the GTP-U tunnel, to implement packet forwarding. Because the first user equipment serving as the access point equipment has a function of accessing a mobile communication network, the first SMF and the first UPF establish a session for the first user equipment. In this way, the first user equipment can communicate with another user equipment in the group through the mobile communication network, so that a user equipment that accesses the mobile communication network through the first user equipment can also communicate with the another user equipment in the group through the mobile communication network.

## Description

### CROSS-REFERENCE TO RELATED APPLICATIONS

This application claims priority to Chinese Patent Application No. 202310231108.0, filed with the China National Intellectual Property Administration on March 01, 2023 and entitled "CROSS-DOMAIN COMMUNICATION METHOD AND COMMUNICATION DEVICE", which is incorporated herein by reference in its entirety.

### TECHNICAL FIELD

This application relates to the field of wireless communication, and in particular, to a cross-domain communication method and a communication device.

### BACKGROUND

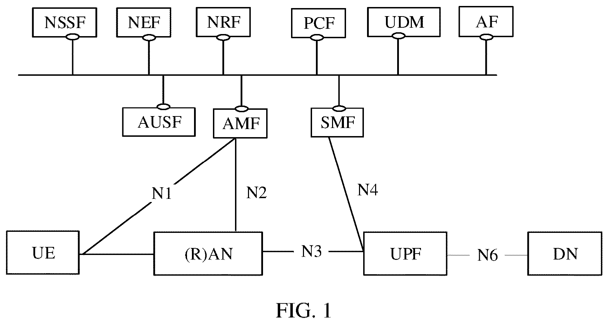

To address challenges from wireless broadband technologies and maintain the leading edge of 3GPP networks, the 3GPP standards group formulated a next-generation mobile communication network architecture (next generation system) at the end of 2016, which is referred to as a 5G network architecture, as shown in FIG. 1.

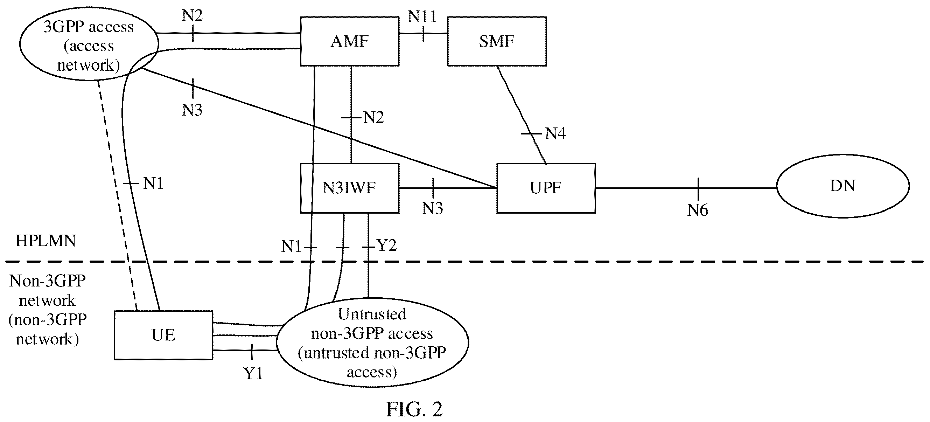

This architecture not only supports access to a core network (core network, CN) side by using wireless technologies (such as LTE and 5G RAN) defined by the 3GPP standards group, but also supports access to the core network side by using non-3GPP access technologies via a non-3GPP interworking function (non-3GPP interworking function, N3IWF) or a next generation access gateway (next generation packet data gateway, ngPDG). When a 5G core network supports untrusted non-3GPP (non-3GPP, N3G) access, a network architecture may be shown in FIG. 2. The N3IWF is an untrusted non-3GPP access gateway, and an untrusted non-3GPP access network may be an untrusted WLAN access network.

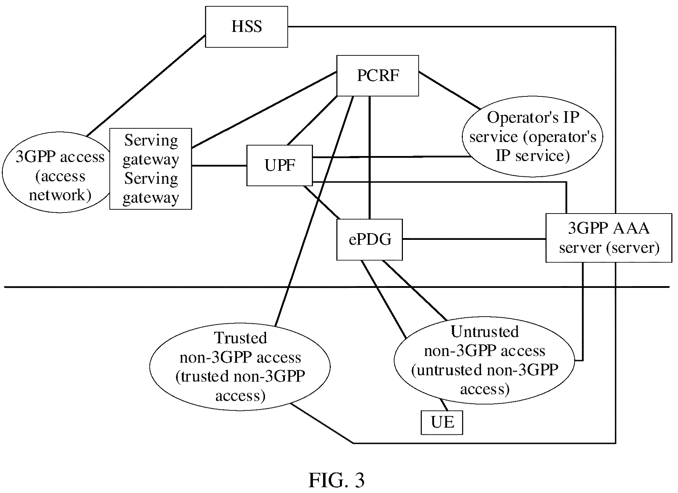

In addition, the 5G core network further supports trusted non-3GPP access and/or wireline access, where a trusted non-3GPP network includes a trusted WLAN network, and a wireline network includes fixed home network access and the like. A network side architecture is similar to the untrusted non-3GPP access architecture, with the untrusted non-3GPP access gateway (the N3IWF in FIG. 2) replaced by a trusted WLAN access gateway (trusted non-3GPP gateway function, TNGF) or a wireline access gateway (wireline access gateway function, W-AGF). Access network devices between a user equipment (user equipment, UE) and the access gateways include a WLAN AP, a wireline access network device (fixed Access network, FAN), a switch, a router, and the like. For a 4G core network (evolved packet core, EPC), a non-3GPP access architecture is also defined, as shown in FIG. 3.

In conventional technologies, the UE may access a 5GC/EPC converged core network from a home network Wi-Fi through the N3IWF/TNGF defined in the 5GC or an ePDG defined in the EPC. In addition, within a home Wi-Fi environment, the UE may access another end user equipment in the home network, where the end user equipment is a user equipment that accesses the network via a home gateway (namely, an optical modem). However, when the UE moves out of coverage of the home WLAN, the UE is referred to as a far-field UE, which cannot access the end equipment in the home network through a cellular network.

### SUMMARY

Embodiments of this application provide a cross-domain communication method and a communication device, to allow a user equipment to communicate with devices in a non-mobile communication network through a mobile communication network.

According to a first aspect, an embodiment of this application provides a cross-domain communication method. The method includes: A first session management function SMF network element determines a first user plane function UPF network element based on a group identifier of a group to which a target user equipment belongs, where the first UPF is a UPF that serves a first user equipment, and the first user equipment is an access point user equipment in the group. The first SMF sends an IP address of the target user equipment and/or the group identifier to the first UPF.

The first SMF determines, based on the group identifier for the target user equipment, the access point equipment in the group to which the target user equipment belongs and the first UPF that serves the access point equipment, and sends the IP address of the target user equipment and/or the group identifier to the determined first UPF. In this way, the first UPF can perform, based on the IP address, functions such as tunnel binding and forwarding of a data packet in the group, and/or can perform, based on the group identifier, functions such as path association and forwarding of the data packet in the group. Therefore, the terminal devices in the group can communicate with each other through a mobile communication network, and a problem that the terminal device can communicate with a terminal device in a local area network when the terminal device is not in the local area network is resolved.

In a possible implementation, the target user equipment is the first user equipment. The method further includes: The first SMF obtains subscription data of the first user equipment, where the subscription data includes one or more of the following information: the group identifier; indication information of the access point user equipment, where the indication information of the access point user equipment indicates that the target user equipment is the access point user equipment; at least one IP address corresponding to the first user equipment, where the at least one IP address is an IP address to be assigned to a third user equipment, and the third user equipment is a user equipment that accesses the first user equipment; an indication to assign at least one IP address to the first user equipment, where the indication to assign the at least one IP address to the first user equipment indicates the first SMF or another network device to assign the at least one IP address to the first user equipment, the at least one IP address is an IP address to be assigned to a third user equipment, and the third user equipment is a user equipment that accesses the first user equipment; or a QoS parameter corresponding to the group identifier.

In a possible implementation, the method further includes: The first SMF sends a first message to the first user equipment, where the first message includes the at least one IP address assigned to the first user equipment and/or an IP address of another user equipment in the group.

In a possible implementation, when a second UPF connected to the target user equipment is different from the first UPF, the method further includes: The first UPF establishes a general packet radio service tunnelling protocol for the user plane GTP-U tunnel between the first UPF and the second UPF, and the first UPF stores a correspondence between the IP address of the target user equipment and the GTP-U tunnel.

In a possible implementation, the method further includes: The first SMF receives the group identifier of the group to which the target user equipment belongs and/or the IP address of the target user equipment and an identifier of the second UPF in the tunnel that are sent by a second SMF. That the first SMF sends the IP address of the target user equipment and/or the group identifier to the first UPF includes: The first SMF sends, to the first UPF, the group identifier and/or the IP address of the target user equipment and the identifier of the second UPF in the tunnel.

In a possible implementation, the method further includes: The first SMF obtains an identifier of the first UPF in the tunnel. The first SMF sends the second tunnel identifier and the IP address of the another user equipment in the group to a second SMF.

In a possible implementation, the method further includes: The second SMF sends the identifier of the first UPF in the tunnel and the IP address of the another user equipment in the group to the second UPF. The second UPF establishes a GTP-U tunnel between the second UPF and the first UPF based on the identifier of the first UPF in the tunnel, and the second UPF stores a correspondence between the GTP-U tunnel and an IP address of a user equipment in the group.

According to a second aspect, an embodiment of this application provides a cross-domain communication method. The method includes: A first user equipment receives a first data packet. If a destination IP address of the first data packet is an IP address of a second user equipment, the first user equipment sends the first data packet to an access gateway, where the access gateway is used for access to a mobile core network, and the second user equipment and the first user equipment belong to a same group; or if a destination IP address of the first data packet is an IP address of a third user equipment, the first user equipment sends the first data packet to the third user equipment, where the third user equipment and the first user equipment belong to a same group.

In a possible implementation, before the first user equipment receives the first data packet, the method further includes: The first user equipment obtains the IP address of the second user equipment; and/or the first user equipment obtains at least one IP address assigned by the mobile core network, where the IP of the third user equipment is among the at least one IP address.

In a possible implementation, that the first user equipment obtains the IP address of the second user equipment includes: The first user equipment receives first information sent by the access gateway, where the first information includes the IP address of the second user equipment; or the first user equipment receives a second data packet sent by the access gateway, where a source address of the second data packet is the IP address of the second user equipment.

In a possible implementation, the method further includes: If the destination IP address of the first data packet is not an IP address of a user equipment in the group, the first user equipment modifies a source IP address of the first data packet to a local IP address of the first user equipment, and sends the modified first data packet to a data network.

In a possible implementation, the method further includes: The first user equipment sends capability indication information and/or a session establishment request to the access gateway, where the capability indication information indicates that the first user equipment supports an IP-type service session, an ethernet-type service session, or an IP and ethernet-type service session, or indicates that the first user equipment is an access point user equipment; and the session establishment request is used to request to establish an IP-type service session, an ethernet-type service session, or an IP and ethernet-type service session.

According to a third aspect, a cross-domain communication method is provided. The method includes: A first session management function SMF network element determines a first user plane function UPF network element based on a group identifier of a group to which a target user equipment belongs, where the first UPF is a UPF connected to a first user equipment, and the first user equipment is an access point user equipment in the group. The first SMF sends an IP address of the target user equipment and/or the group identifier to the first UPF. The first UPF establishes a GTP-U tunnel between the first UPF and a second UPF, and stores a correspondence between the IP address of the target user equipment and the GTP-U tunnel, where the second UPF is a UPF that serves the target user equipment.

In a possible implementation, the method further includes: The first UPF receives a first data packet from the first user equipment. When a destination IP address of the first data packet is the IP address of the target user equipment, the first UPF sends the first data packet through the tunnel corresponding to the IP address of the target user equipment.

In a possible implementation, the method further includes: The second UPF obtains an IP address of a user equipment in the group, and establishes a correspondence between the IP address of the user equipment in the group and the tunnel. The second UPF receives a second data packet sent by the target user equipment, and if a destination IP address of the second data packet is the IP address of the user equipment that belongs to the group, the second UPF sends the second data packet through the tunnel based on the correspondence.

In a possible implementation, the method further includes: The first SMF obtains an identifier of the first UPF in the tunnel. The first SMF sends the identifier of the first UPF in the tunnel, the group identifier, and/or an IP address of another user equipment in the group to the second SMF. The second SMF sends the identifier of the first UPF in the tunnel, the group identifier, and/or the IP address of the another user equipment in the group to the second UPF. The second UPF establishes the GTP-U tunnel between the second UPF and the first UPF based on the identifier of the first UPF in the tunnel, and the second UPF stores a correspondence between the GTP-U tunnel and the group identifier and/or the IP address of the another user equipment in the group.

According to a fourth aspect, an embodiment of this application provides a communication device. The communication device includes a processor, and a memory and a communication interface that are separately coupled to the processor. The communication interface is configured to communicate with another device. The processor is configured to: run instructions or a program in the memory, to perform the method according to any one of the first aspect and the possible implementations of the first aspect through the communication interface.

According to a fifth aspect, an embodiment of this application provides a communication device. The communication device includes a processor, and a memory and a communication interface that are separately coupled to the processor. The communication interface is configured to communicate with another device. The processor is configured to: run instructions or a program in the memory, to perform the method according to any one of the second aspect and the possible implementations of the second aspect through the communication interface.

According to a sixth aspect, an embodiment of this application provides a communication system. The communication system includes the communication device according to the fourth aspect and the communication device according to the fifth aspect.

According to a seventh aspect, an embodiment of this application provides a computer-readable storage medium. The computer-readable storage medium stores instructions. When the instructions are run on a computer, the computer is caused to perform the method according to any one of the first aspect and the implementations of the first aspect, the method according to any one of the second aspect and the implementations of the second aspect, or the method according to any one of the third aspect and the implementations of the third aspect.

According to an eighth aspect, an embodiment of this application provides a computer program product including instructions. When the instructions are run on a computer, the computer is caused to perform the method according to any one of the first aspect and the implementations of the first aspect, the method according to any one of the second aspect and the implementations of the second aspect, or the method according to any one of the third aspect and the implementations of the third aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of still another network architecture according to an embodiment of this application;
FIG. 4 is a diagram of still another network architecture according to an embodiment of this application;
FIG. 5 is a diagram of still another network architecture according to an embodiment of this application;
FIG. 6 is a diagram of still another network architecture according to an embodiment of this application;
FIG. 7 is a schematic flowchart of a cross-domain communication method according to an embodiment of this application;
FIG. 8A and FIG. 8B are a schematic flowchart of another cross-domain communication method according to an embodiment of this application;
FIG. 9A and FIG. 9B are a schematic flowchart of still another cross-domain communication method according to an embodiment of this application;
FIG. 10A and FIG. 10B are a schematic flowchart of a cross-domain communication method according to an embodiment of this application;
FIG. 11 is a diagram of a structure of a communication apparatus according to an embodiment of this application; and
FIG. 12 is a diagram of a structure of a communication device according to an embodiment of this application.

### DESCRIPTION OF EMBODIMENTS

In current communication technologies, when a UE moves out of coverage of a WLAN, the far-field UE cannot access a user equipment in the WLAN in a far field since there is a firewall in the WLAN. For example, the WLAN may be a home WLAN, and the firewall may be disposed in a home gateway. In this case, the far-field UE cannot access an end user equipment in the home network, for example, a tablet computer, a smart television, a smart refrigerator, or a smart meter. Specifically, the end user equipment obtains an IP address through the home gateway, encapsulates a data packet by using the IP address as a source IP address, and sends the data packet to the network. When the data packet passes through the gateway, the firewall in the gateway replaces the source IP address of the data packet with a new IP address, and then sends the data packet to a target equipment indicated by a destination IP address, that is, performs network address translation (network address translation, NAT). For a data packet sent from the outside to the home network, the firewall allows only the data packet returned by the target equipment to the end user equipment to pass through. For a data packet sent by another device, for example, a far-field UE, the far-field UE cannot obtain the new IP address (namely, a NAT-translated IP address) of the end equipment. Even if the UE can obtain the new IP address of the end equipment, the firewall still intercepts the data packet. As a result, the data packet sent by the far-field UE to the end user equipment in the home network cannot pass through the firewall, and consequently, the far-field UE cannot access the end user equipment in the home network.

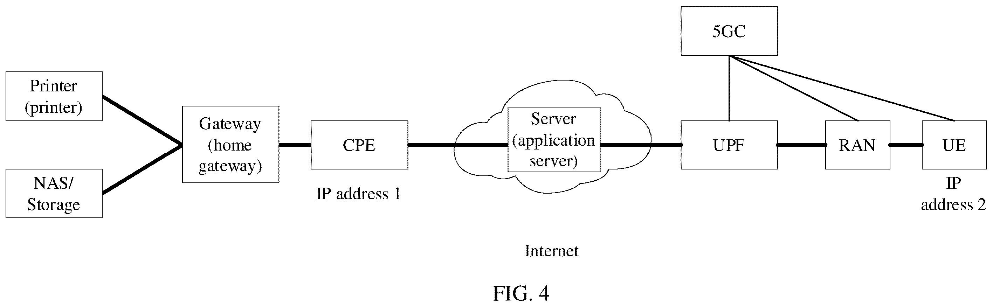

FIG. 4 provides a solution to a problem that a UE cannot access an end user equipment in a home network. As shown in FIG. 4, the end user equipment in the home network accesses a home gateway (gateway) in a wireless or wireline manner; the home gateway assigns an IP address in the home network to each end user equipment; and the home gateway accesses the internet (internet) through a network customer premise equipment (customer premise equipment, CPE). The CPE may access the internet through a fixed network, and an IP address 1 in a public network is assigned to the CPE. A far-field user equipment (the UE in FIG. 4) may access the internet through a 5G mobile communication network, and an IP address 2 in the public network is assigned to the far-field user equipment. In FIG. 4, an example in which the home gateway and the CPE are separately deployed is used. During actual application, the home gateway and the CPE may alternatively be deployed together.

In the implementation solution shown in FIG. 4, an application server (server) is deployed in the internet. When a printer (printer) in the home network is started, the printer may be connected to the application server. The printer may use an IP address in the home network as a source address to send a data packet to the application server. When the data packet passes through the CPE, the CPE replaces the source address with the IP address 1 of the CPE in the public network. In addition, the CPE may replace port information in the data packet, record a correspondence between the to-be-replaced IP address and port information and the replaced IP address and port information, and then send the data packet to the application server. When the far-field user equipment needs to access the printer in the home network, the far-field user equipment sends a data packet to the application server, where the data packet may include identification information of an application layer. The application server may determine, based on the identification information of the application layer, the printer to be accessed by the far-field user equipment, and send, to the CPE, the data packet sent by the far-field user equipment. After receiving the data packet, the CPE replaces, based on the recorded correspondence, a destination IP address in the data packet with the IP address of the printer in the home network, and sends the data packet to the printer.

In the solution shown in FIG. 4, the application server needs to be deployed in the internet, to implement communication between the printer in the home network and the far-field user equipment. However, the application server can support only a specific application, that is, communication can be performed by using the foregoing solution only when both the end equipment in the home network and the far-field user equipment use an application supported by the application server. Therefore, this solution has a small quantity of application scenarios, and cannot meet a communication requirement of a user.

In view of this, embodiments of this application provide a cross-domain communication method for a far-field user equipment to communicate with a device in a local area network.

In the cross-domain communication method provided in embodiments of this application, the local area network (for example, a home network) has a function of accessing a mobile communication network. For example, a home user equipment (home UE, H-UE) is an access point equipment deployed at a user's home, and supports wireline access and/or WLAN access. In addition, the H-UE may further support a 5G/4G cellular access technology. In this case, the H-UE may access a 5GC or an EPC through a cellular base station. Specifically, the H-UE accesses the 5GC or the EPC in the following three manners.
(1) When an N3IWF, a TNGF, or a home access gateway (home local gateway, HLG) is deployed on a network side, the H-UE accesses the 5GC network through the N3IWF, the TNGF, or the HLG. As shown in FIG. 1, the 5GC network includes the following network elements.

A user plane function (user plane function, UPF) network element is mainly responsible for user plane-related functions such as data packet routing and transmission, packet detection, service usage reporting, QoS processing, uplink packet detection, and downlink data packet storage.

Main functions of an access and mobility management function (access and mobility management function, AMF) include access and mobility-related functions such as connection management, mobility management, registration management, access authentication and authorization, reachability management, and security context management.

A session management function (session management function, SMF) is mainly responsible for session-related functions such as session management (for example, session establishment, modification, and release, including tunnel maintenance between the UPF and a RAN), UPF selection and control, service and session continuity (service and session continuity, SSC) mode selection, and roaming.

A policy control function (policy control function, PCF) is responsible for policy-related functions such as unified policy formulation, policy control providing, and obtaining of policy decision-related subscription information from a UDR.

A data network (data network, DN) is mainly responsible for providing a data transmission service for a terminal, and may be a public data network (public data network, PDN), for example, the internet (internet), or may be a local access data network (local access data network, LADN), for example, a campus DN.

An authentication server function (authentication server function, AUSF) is mainly responsible for authenticating the user equipment, to determine legality of the user equipment.

A unified data management (unified data management, UDM) is mainly responsible for storing subscription data of the user equipment.

An application function (application function, AF) is mainly responsible for sending an applicationrelated requirement to the PCF, so that the PCF generates a corresponding policy.

The N3IWF is a non-3GPP interaction function, and may also be referred to as a non-3GPP access gateway or an untrusted WLAN access gateway. An N3 interface is used between the N3IWF and the UPF, and supports a GTP-U protocol.

The TNGF is a trusted non-3GPP access gateway. An N3 interface is used between the TNGF and the UPF, and supports the GTP-U protocol.

The HLG is a home access gateway. An N6 interface is used between the HLG and the UPF. That is, the HLG establishes a connection to the UPF through the N6 interface. The N6 interface supports at least one of an IP protocol and/or a VxLAN protocol.

The foregoing "network element" may also be referred to as an "entity" or an "apparatus". This is not limited in this application. In actual deployment, the network elements may be co-located. When two network elements are co-located, interaction between the two network elements provided in embodiments of this application becomes an internal operation of the co-located network element or may be omitted. It should be understood that FIG. 1 provides only an example of a 5GC network architecture that can be applied to embodiments of this application. During actual application, more or fewer network elements may be included than those in FIG. 1.

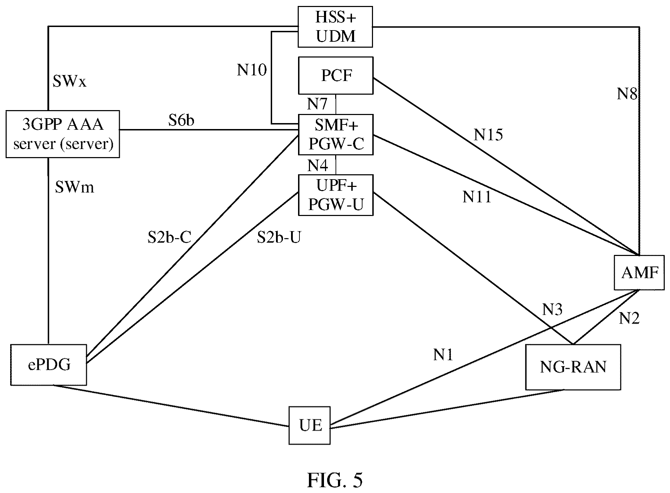

(2) When an evolved packet data gateway (evolved packet data gateway, ePDG) is deployed on a network side, a core network is a core network that converges the 5GC and the EPC, which is referred to as a 5GC/EPC converged network for short in the following descriptions. As shown in FIG. 5, the 5GC/EPC converged core network may include the following network elements: an AMF, a home subscriber server (home subscribe user, HSS)+SMF (indicating that the HSS and the SMF can be integrated), a PCF, an SMF+packet data network gateway control plane (PGW-C) (indicating that the SMF and the PGW-C can be integrated), a UPF+packet data network gateway data plane (PGW-U) (indicating that the SMF and the PGW-U can be integrated), and 3GPP authentication, authorization, and accounting (authentication, authorization, and accounting, AAA). The UE may access the 5GC/EPC converged core network through a next generation radio access network (next generation radio access network, NG-RAN) or the ePDG.

The foregoing "network element" may also be referred to as an "entity" or an "apparatus". This is not limited in this application. In actual deployment, the network elements may be co-located. When two network elements are co-located, interaction between the two network elements provided in embodiments of this application becomes an internal operation of the co-located network element or may be omitted. It should be understood that FIG. 5 provides only an example of a 5GC/EPC converged network that can be applied to embodiments of this application. During actual application, more or fewer network elements may be included than those in FIG. 5.

(3) When the H-UE supports access to 5G new radio (new radio, NR), the H-UE accesses the SGC core network through an NG-RAN.

In other words, the core network in embodiments of this application is the 5GC/EPC converged core network, the 5GC network, or a core network in a future mobile communication system.

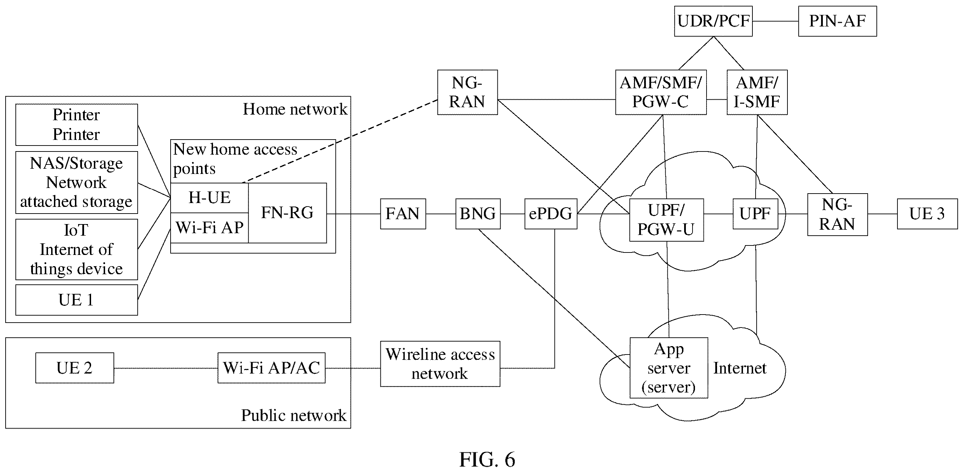

An example in which the H-UE accesses the 5GC/EPC converged network through the ePDG is used. A network architecture to which the cross-domain communication method provided in embodiments of this application is applicable may be shown in FIG. 6. An end user equipment (for example, a printer (printer), network attached storage (NAS storage), an internet of things (internet of things, IoT) device, or a UE 1) in a home network may access a network through an access point equipment H-UE. The H-UE may access the 5GC/EPC converged network through a fixed home gateway (fixed network RG, FN-RG), a fixed access network (fixed access network, FAN), a broadband network gateway (broadband network gateway, BNG), or an ePDG.

A UE 3 is a far-field user equipment, and accesses the 5GC/EPC converged core network through a RAN. In the current communication technologies, the UE 3 cannot access the end user equipment in the home network. However, after the cross-domain communication method provided in embodiments of this application is applied, the UE 3 can access the end user equipment in the home network.

A UE 2 is a user equipment in another WLAN network (for example, a public area WLAN), and the WLAN network in which the UE 2 is located may be connected to the ePDG through a wireline access network.

As described above, the H-UE may alternatively access the SGC core network through an N3IWF or a TNGF. In this case, the ePDG in FIG. 6 may be replaced with the N3IWF or the TNGF. The H-UE may alternatively access the SGC core network through an NG-RAN. In this case, the ePDG in FIG. 6 may be replaced with the NG-RAN.

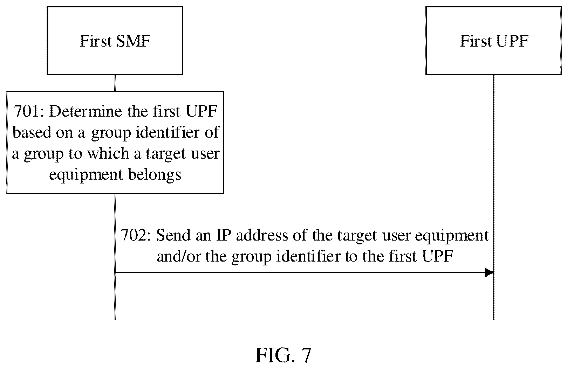

FIG. 7 is a schematic flowchart of a cross-domain communication method according to an embodiment of this application. As shown in the figure, in the method, the following network elements are included.

A first user equipment is a user equipment deployed in a first network (non-mobile communication network). For example, the first user equipment may be an H-UE deployed in a home local area network. The first user equipment may be a user equipment having an access point function. For example, another user equipment in the first network accesses the first network through the first user equipment. Alternatively, the first user equipment may be a functional module deployed on an access point equipment or a gateway device. Usually, the first user equipment does not have a communication requirement, and a main function of the first user equipment is to implement that a user equipment in the first network communicates with a user equipment outside the first network through a mobile communication network.

A second user equipment is a user equipment that accesses the mobile communication network but does not access the first network. Because the second user equipment does not access the first network, according to an existing communication solution, the second user equipment cannot communicate with a user equipment in the first network. However, in this embodiment of this application, the second user equipment may communicate with the user equipment in the first network through the mobile communication network.

A third user equipment is a user equipment that accesses the first network. For example, the third terminal device may be a mobile phone, a personal computer (personal computer, PC), a tablet computer, a printer, a smart home device, or network attached storage (network attached storage, NAS).

A first user plane network element is a user plane network element that serves the first user equipment. The first user plane network element may be a gateway device deployed in the mobile network, may be an evolved packet data gateway (evolved Packet Data Gateway, ePDG), may be a UPF in a 5GC network, or may be a network element configured to perform user plane management in a mobile communication system. For ease of description, an example in which the first user plane network element is the UPF is used for description in the following embodiments. It should be understood that the UPF in the following embodiments may alternatively be replaced with another session management network element or another control plane network element.

A tunnel may be established between the first user equipment and the first user plane network element, so that the first user equipment sends a data packet of another user equipment in the first network to the first user plane network element through the tunnel. In this way, the first user plane network element sends, through the mobile communication network, the data packet to the second user equipment in the mobile communication network. For example, when the first user plane network element is the ePDG, an IP-Sec tunnel, a GPRS tunnelling protocol for the user plane (GPRS tunnelling protocol, GTP-U) tunnel, or a virtual extensible local area network (virtual extensible local area network, VxLAN) tunnel may be established between the first terminal device and the ePDG.

A second user plane network element is a user plane network element that serves the second user equipment. The second user plane network element may be a UPF in the 5GC network, or may be a network element configured to perform user plane management in the mobile communication system. For ease of description, the UPF is used as an example for description in the following embodiments.

A first session management function network element is a control plane network element that serves the first terminal device. Further, the first session management function network element may be a control plane network element that serves the second terminal device. That is, the first terminal device and the second terminal device have a same control plane network element. Certainly, the first terminal device and the second terminal device may alternatively have different control plane network elements. In this case, a first control plane network element is a control plane network element of the first terminal device. The first control plane network element may be an SMF in the SGC network, or may be another network element used for session management. For ease of description, the SMF is used as an example for description in the following embodiments. It should be understood that the SMF in the following embodiments may alternatively be replaced with another session management network element or another control plane network element.

Embodiments of this application further relate to a concept of a group. The group may be understood as a virtual local area network or a "subnet". The home network shown in FIG. 6 is a group, and the group may include a user equipment that is connected in a wireline manner, or may include a user equipment that is connected in a wireless manner. The group may include an access point user equipment, for example, the H-UE shown in FIG. 6, or may include a non-access point user equipment, for example, the printer, the IoT, or the UE shown in FIG. 6. In embodiments of this application, the access point user equipment in the group has a function of accessing a wireless communication system, and the non-access point equipment in the group also include a user equipment that can access the wireless communication system. For example, in a scenario shown in FIG. 6, both the H-UE used as the access point user equipment in the group and the UE 3 in the group have a function of accessing the wireless communication system. Although the UE 3 has moved out of coverage of the home network and is referred to as a far-field UE, the UE 3 belongs to the group. After the cross-domain communication method provided in embodiments of this application is used, the UE 3 can access another user equipment in the home network through the mobile communication network. In conclusion, the group is a personal internet of things (internet of things, IoT) network including a plurality of user equipments, or the group is a subnet including a plurality of terminal devices. Therefore, the group may also be referred to as a "subnet". The following uses a "group" as an example for description. That is, the "group" in the following descriptions may alternatively be replaced with a concept such as a "subnet", a "personal IoT network", a "home network", or a "home subnet".

As shown in FIG. 7, the cross-domain communication method provided in this embodiment of this application may include the following steps.

Step 701: The first SMF determines the first UPF based on a group identifier of a group to which a target user equipment belongs.

An access point user equipment in the group to which the target user equipment belongs is referred to as the first user equipment. The first user equipment may be deployed in the first network (the non-mobile communication network), and another user equipment (for example, a printer or a PC) in the first network may access the first network through the first user equipment. The first UPF is a UPF that serves the first user equipment.

The target user equipment may be the second user equipment (namely, the user equipment that accesses the mobile communication network). In this case, based on the group identifier of the group to which the target user equipment belongs, the first SMF may determine the access point equipment in the group, namely, the first user equipment, and then determine the first UPF that serves the first user equipment. Alternatively, the first SMF may obtain, based on the group identifier of the group to which the target user equipment belongs, the first UPF corresponding to the group.

The target equipment may alternatively be the first user equipment, indicating that the first user equipment accesses the mobile communication network and requests the first SMF to establish a session for the first user equipment. In this case, the first UPF determined by the first SMF is a UPF connected to the target user equipment or a UPF that serves the first user equipment.

The first SMF performing step 701 may be triggered by a request. For example, the first SMF may perform the foregoing step after receiving a first request for establishing a session for the target user equipment; or the first SMF may perform the foregoing step after receiving a first request for establishing a path for the target user equipment.

In an implementation, the first request may include the group identifier of the group to which the target user equipment belongs, and the first SMF may obtain the group identifier for the target user equipment based on the first request. In another implementation, the first SMF may obtain subscription information of the target user equipment after receiving the first request. For example, the first SMF may obtain the subscription information of the target user equipment from a UDM, where the subscription information of the target user equipment includes the group identifier of the group to which the target user equipment belongs.

When the target user equipment is the second user equipment, the subscription information of the target user equipment may include one or more of the following information:
(1) the group identifier of the group to which the target user equipment belongs;
(2) indication information of a non-access point user equipment, where the indication information of the non-access point user equipment indicates that the target user equipment is a non-access point user equipment in the group, or indicates that the target user equipment is a secondary device in the group; and in a group, an access point user equipment in the group, namely, the first user equipment, may be referred to as a primary device, and another device in the group may be referred to as a secondary device;
(3) information about the first SMF, where the information about the first SMF indicates an SMF that serves the first user equipment in the group; or
(4) information about the first UPF, where the information about the first UPF indicates the UPF that serves the first user equipment in the group, where when the subscription information includes the information about the first UPF, the first SMF may determine the first UPF based on the subscription information of the second user equipment.

When the target user equipment is the first user equipment, the subscription information obtained by the first SMF may include one or more of the following information:
(5) the group identifier of the group to which the target user equipment belongs;
(6) indication information of the access point user equipment, where the indication information of the access point user equipment indicates that the target user equipment is the access point user equipment in the group, or indicates that the target user equipment is a primary device in the group;
(7) at least one IP address corresponding to the first user equipment, where the at least one IP address corresponding to the first user equipment is an IP address to be assigned to a user equipment that accesses the first network (for example, the third user equipment) through the first user equipment; for example, an address segment IP 1 to IP 20 is pre-assigned to user equipments in the first network, and the address segment is added to the subscription information of the first user equipment; and in this embodiment of this application, the IP address segment may also be referred to as an IP address of the first user, because the IP address segment is configured in the first user equipment, and when another user equipment accesses the first network through the first user equipment, the first user equipment selects an IP address from the IP address segment and assigns the IP address to the new user equipment that accesses the first network, or a network side (the SMF or the UPF) selects an IP address from the IP address segment and assigns the IP address to the new user equipment that accesses the first network;
(8) an indication to assign at least one IP address to the first user equipment, where the indication to assign at least one IP address to the first user equipment indicates a network side device to assign the at least one IP address to the first user equipment, the at least one IP address is an IP address to be assigned to a user equipment that accesses the first network (for example, the third user equipment) through the first user equipment, and the network side device may be the first SMF or the first UPF; and if the first SMF assigns the at least one IP address to the first user equipment, after the first SMF obtains the subscription data of the first user equipment, the first SMF may assign the at least one IP address to the first user equipment for a user equipment in the first network to use in a group communication process; or if the first UPF assigns and indicates the at least one IP address to the first user equipment, after the first SMF obtains the subscription data of the first user equipment, the first SMF may indicate the first UPF to assign the at least one IP address to the first user equipment for a user equipment in the first network to use in a group communication process, and in this case, the first SMF may not perform step 702; or
(9) a quality of service (quality of service, QoS) parameter corresponding to the group identifier, where the QoS parameter corresponding to the group identifier indicates a QoS parameter of the group to which the target equipment belongs; and to meet a personalized requirement of a user, different QoS parameters may be set for different groups, so that a network side device, for example, a UPF or a RAN, transmits a data packet in a corresponding group based on a QoS parameter corresponding to the group.

Step 702: The first SMF sends the IP address of the target user equipment and/or the group identifier to the first UPF.

The first SMF sends the IP address of the target user equipment to the first UPF, so that the first UPF performs, based on the IP address, functions such as tunnel binding and forwarding of a data packet in the group. The first SMF sends the group identifier to the first UPF, so that the first UPF can perform, based on the group identifier, functions such as path association and forwarding of a data packet in the group. If the first SMF sends only the group identifier to the first UPF, the first UPF may obtain the IP address of the target user equipment in another manner, for example, by learning from a source IP address or a destination IP address of a data packet, to bind the IP address to a transmission tunnel of the data packet.

The IP address of the target user equipment may be obtained by the first SMF through the first request for establishing the session; or may be assigned by the first SMF to the target user equipment, for example, may be assigned by the first SMF to the target user equipment based on the information (7) or (8) in the subscription information of the target user equipment; or may be obtained by the first SMF in another manner.

When the target user equipment is the first user equipment, the first SMF may further send a first message, for example, a session establishment accept message (session establishment accept message), to the first user equipment, where the first message includes the IP address of the first user equipment, and/or the group identifier, and/or an IP address of another user equipment in the group. For example, when the first SMF sends the first message to the first user equipment, the first SMF has obtained an IP address of the second user equipment. In this case, the first SMF may include the IP address of the first user equipment and the IP address of the second user equipment in the first message, and send the first message to the first user equipment, so that the user equipment in the first network can communicate with the second user equipment based on the IP address of the second user equipment.

As described above, when the target user equipment is the first user equipment, the IP address of the target user equipment may include an IP address used in the group by the target user equipment, and may further include an IP address used in the group by the another user equipment that accesses the first network through the first user equipment. In this case, the IP address of the target user equipment sent by the first SMF may actually include an IP address segment. An address in the IP address segment may be assigned by the first user equipment or the network side to a user equipment, for example, a PC, a printer, a NAS, or a mobile phone, that accesses the first network through the first user equipment. As a result, the first UPF may forward a data packet based on the IP address segment in a subsequent communication process.

For example, the network device assigns an IP address to the third terminal device. The third terminal device sends a DHCP message to the first user equipment, to request for assignment of an IP address. The first user equipment forwards the DHCP message to the network side (the SMF or the UPF). Then, the network side selects an IP address from the address segment, and sends the IP address to the first user equipment through a DHCP reply message. The first user equipment then forwards the DHCP reply message to the third terminal device.

The first UPF is the UPF that serves the first user equipment. The first UPF obtains an IP address corresponding to a PDU session of the first user equipment, and establishes the PDU session with the first user equipment. In other words, the PDU session is established between the first UPF and the first user equipment.

For example, when the H-UE (the first user equipment) shown in FIG. 6 accesses the 5GC/EPC converged network through the ePDG, the first SMF sends an IP address of the H-UE to the UPF, so that the UPF establishes a PDU session with the H-UE: UPF-ePDG-BNG-FAN-FN-RG-H-UE. When the H-UE (the first user equipment) shown in FIG. 6 accesses the 5GC through the NG-RAN, the first SMF sends an IP address of the HUE to the UPF, so that the UPF establishes a tunnel with the H-UE: UPF-NG-RAN-H-UE. Alternatively, an IPsec tunnel is established between the H-UE and the HLG, and an IPsec tunnel, or a VxLAN tunnel, or an IP connection is established between the HLG and the first UPF. In other words, the HLG and the first UPF are based on an N6 interface.

When the target user equipment is the second user equipment, the first SMF sends an IP address of the second user equipment to the first UPF in step 702, so that the first UPF determines, based on the IP address of the second user equipment, a UPF that serves the second user equipment.

The UPF that serves the second user equipment may be the first UPF, or may be a second UPF different from the first UPF. When the UPF that serves the second user equipment is the first UPF, the first UPF may store the IP address of the second user equipment, to subsequently forward the data packet in the group. When the UPF that serves the second user equipment is the second UPF different from the first UPF, to establish a communication link between the user equipment in the first network and the second user equipment, a tunnel needs to be established between the first UPF and the second UPF. In this way, when the third user equipment in the first network communicates with the second user equipment, a data packet can be transmitted from the third user equipment to the second user equipment or transmitted from the second user equipment to the third user equipment through the first user equipment, the first UPF, and the second UPF. Specifically, the first UPF may establish a GPRS tunnelling protocol for the user plane (GPRS tunnelling protocol for the user plane, GTP-U) tunnel with the second UPF, and store a correspondence between the IP address of the second user equipment and the GTP-U tunnel. In addition, the IP address of the second user equipment is sent to the first UPF, so that the first UPF can further forward the data packet in the group based on the IP address of the second user equipment in a subsequent communication process.

According to the foregoing method, a tunnel between the first user equipment in the first network and the first UPF in the mobile communication network can be established, and the tunnel between the first UPF that serves the first user equipment in the first network and the second UPF that serves the second user equipment in the mobile communication network can be established. In this way, establishment of the communication link between the first user equipment in the first network and the second user equipment in the mobile communication network is completed, so that the first user equipment in the first network and the third user equipment that accesses the first network through the first user equipment can communicate with the second user equipment in the mobile communication network. The foregoing method resolves a problem that the second user equipment cannot communicate with another user equipment in the first network after the second user equipment is out of coverage of the first network, and the solution does not depend on a specific application server, so that a serviceable application is extended.

In a possible implementation, when the target user equipment is the second user equipment in the group and an SMF that serves the non-access point equipment is different from the first SMF that serves the first user equipment, before step 701, the first SMF may further receive information about the second user equipment sent by the second SMF (namely, the SMF that serves the second user equipment), to trigger the first SMF to perform step 701. The information about the second user equipment may include a group identifier of a group to which the second user equipment belongs, the IP address of the second user equipment, and/or an identifier of the second UPF that serves the second user equipment in the tunnel. The identifier of the second UPF in the tunnel may include an IP address of the second UPF and/or a tunnel endpoint identifier (tunnel endpoint identifier, TEID) of the second UPF.

The first SMF may determine, based on the group identifier of the group to which the second user equipment belongs, that the second user equipment and the first user equipment belong to a same group, and then determine the first UPF that serves the first user equipment in the group, to send, to the first UPF, the group identifier, the IP address of the second user equipment, and/or the identifier of the second UPF in the tunnel. Specifically, in step 702, the first SMF may send, to the first UPF, the group identifier, the IP address of the second user equipment, and/or the identifier of the second UPF in the tunnel, or the first SMF may send the information about the second user equipment to the first UPF through different messages.

In addition, when the target user equipment is the second user equipment in the group, and an SMF that serves the non-access point equipment is different from the first SMF that serves the first user equipment, the first SMF may alternatively obtain an identifier of the first UPF in the tunnel, and send, to the second SMF, the identifier of the first UPF in the tunnel, where the identifier of the first UPF in the tunnel may include an IP address of the first UPF and/or a TEID of the first UPF. Further, the first SMF may send an IP address of another user equipment in the group to the second SMF. For example, the first SMF may send the IP address (or the IP address segment) of the first user equipment to the second SMF, and may also send, to the second SMF, an IP address of another user equipment that accesses the mobile communication network in the group, so that the second SMF triggers the second UPF to establish the tunnel with the first UPF, or triggers the second UPF to establish a tunnel with a UPF that serves the another user equipment in the group. In this way, the data packet in the group can be forwarded in the subsequent communication process.

Further, after receiving the identifier of the first UPF in the tunnel and/or the IP address of the another user equipment in the group that are/is sent by the first SMF, the second SMF may send the identifier of the first UPF in the tunnel and/or the IP address of the another user equipment in the group to the second UPF. In this way, the second UPF may establish the tunnel with the first UPF based on the identifier of the first UPF in the tunnel, and establish a correspondence between the IP address of the user equipment in the group and the tunnel between the first UPF and the second UPF, or the second UPF establishes the tunnel with the UPF that serves the another user equipment in the group, and establishes a correspondence between the IP address of the another user equipment and the established tunnel.

According to the foregoing method embodiment, the tunnel between the first user equipment and the first UPF is established, and the tunnel between the first UPF and the second UPF that serves the second user equipment can be established. After establishment of the tunnels is completed, the first user equipment and the second user equipment can communicate with each other through the established tunnels.

Specifically, after establishment of the tunnel between the first UPF and the first user equipment is completed, the first user equipment may communicate with the user equipment in the mobile communication network through the first UPF. When the first user equipment receives a first data packet, if a destination IP address of the first data packet is the IP address of the second user equipment, the first user equipment may forward the first data packet through the tunnel between the first user equipment and the first UPF. As shown in FIG. 6, on the tunnel between the first user equipment and the first UPF, the first user equipment is not directly connected to the first UPF, but is connected to the first UPF through an access gateway in the first network. Therefore, the first user equipment sends the first data packet to the access gateway, and the access gateway sends the first data packet to the first UPF.

If the destination IP address of the first data packet is not an IP address of a user equipment in the group, the first user equipment may modify a source IP address of the first data packet to a local IP address of the first user equipment, and then send the modified first data packet to a data network (for example, a fixed network). The local IP address of the first user equipment is an IP address assigned by the data network to the first user equipment, for example, a local IP address assigned by a wireline network to the first user equipment, not the IP address used by the first user equipment in the group. When the first user equipment sends an uplink data packet to the data network, the first user equipment encapsulates the uplink data packet by using the local IP address as the source IP address.

In addition, the first user equipment may further receive the first data packet through the tunnel between the first user equipment and the first UPF, where the destination IP address of the first data packet is the IP address of the third user equipment. In this case, the first user equipment sends the first data packet to the third user equipment.

When forwarding a received data packet, the first user equipment determines whether a destination IP address of the data packet is an IP address of a user equipment in the group. In this case, the first user equipment needs to obtain an IP address of another user equipment in the group in advance.

In a possible implementation, the first user equipment may receive an IP address that is of a user equipment in the group and that is sent by the mobile communication network core network (for example, the first SMF). For example, the first SMF sends, to the first user equipment, the IP address segment assigned to the first user equipment, where the assigned IP address segment is an IP address of a user equipment that belongs to the group and that accesses the first network through the first user equipment. In other words, an IP address in the IP address segment belongs to the group. For another example, the first SMF may send the IP address of the second user equipment or the IP address of the another user equipment in the group to the first user equipment. The first user equipment may record that the IP address of the second user equipment or the another user equipment in the group belongs to the group, or record a correspondence between the IP address of the second user equipment or the another user equipment in the group and the tunnel (the tunnel between the first user equipment and the first UPF). In this case, when receiving the data packet whose destination IP address is the IP address of the second user equipment, the first user equipment can determine that the destination IP address of the data packet belongs to the group, and send the data packet to the first UPF through the access gateway.

In another possible implementation, the first user equipment may alternatively obtain the IP address of the second user equipment through learning. Specifically, when receiving the data packet through the tunnel established between the first user equipment and the first UPF, the first user equipment may obtain the source IP address (denoted as an IP address 1, where the IP address 1 may be the IP address of the second user equipment or the IP address of the another user equipment) of the data packet, and record a correspondence between the IP address 1 and the tunnel, or record that the IP address 1 belongs to the group. In this way, the data packet whose destination address is the IP address 1 is forwarded through the tunnel between the first user equipment and the first UPF in the subsequent communication process. For example, the second user equipment sends the data packet to the third user equipment in the first network. The data packet is first transmitted to the second UPF that serves the second user equipment, reaches the first UPF through the tunnel between the second UPF and the first UPF, and then reaches the first user equipment through the tunnel 1 between the first UPF and the first user equipment. The first user equipment obtains the source IP address of the data packet, namely, the IP address of the second user equipment, records the correspondence between the IP address of the second user equipment and the tunnel 1, and then sends the data packet to the third user equipment. When sending the data packet to the second user equipment, the third user equipment uses the IP address of the second user equipment as the destination IP address of the data packet, and then sends the data packet to the first user equipment. The first user equipment determines that there is a correspondence between the destination IP address of the data packet and the tunnel 1, so that the first user equipment forwards the data packet through the tunnel 1.

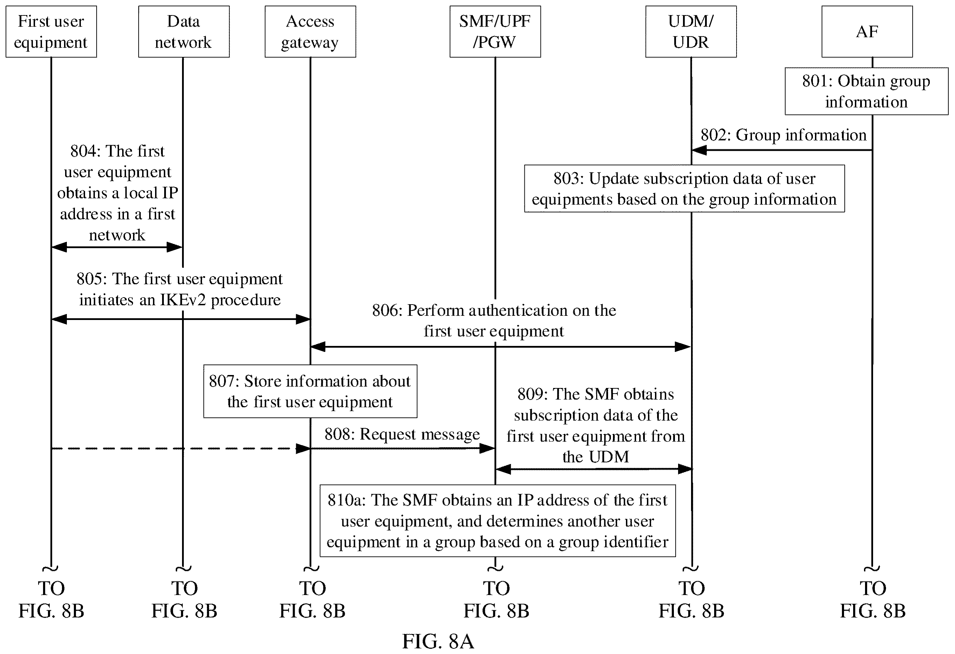

To better understand the foregoing embodiments of this application, the following provides examples with reference to FIG. 8A to FIG. 10B.

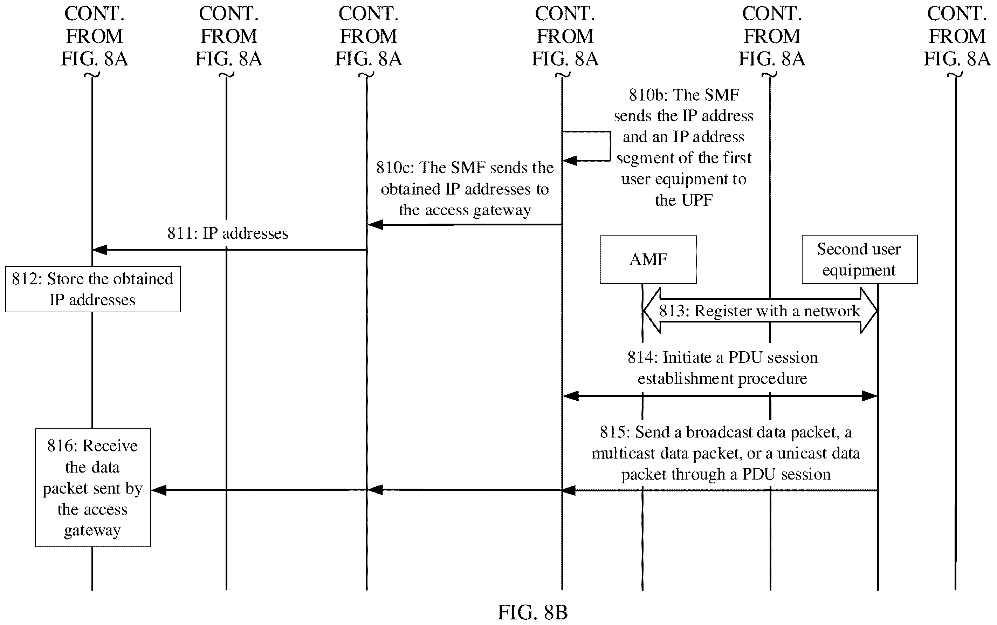

A procedure of a cross-domain communication method shown in FIG. 8A and FIG. 8B may include the following steps.

Step 801: An AF obtains group information.

The group information includes a group identifier, identifiers of user equipments included in the group, a quantity of user equipments included in the group, and the like. The user equipments in the group include the first user equipment and the second user equipment, and may further include a third user equipment in a first network. A user equipment identifier may include a generic public subscription identifier (generic public subscription identifier, GPSI), a mobile station international ISDN number (mobile station international ISDN number, MSISDN), a subscription permanent identifier (subscription permanent identifier, SUPI), or the like. The quantity of user equipments is used to indicate a maximum quantity of all user equipments allowed to be included in the group, where all the user equipments include a user equipment capable of accessing a mobile communication network and a user equipment without a function of accessing the mobile communication network; or may be used to indicate a quantity of user equipments that are allowed to be included in the group and that are capable of accessing the mobile communication network.

Optionally, the AF may obtain the group information based on input information of a user, or may generate the group information based on input information of a user and/or configuration information for enabling a service of the user. For example, the user may fill in the group information by logging in to a service web page of an operator, and the website uploads, to the AF, the group information filled in by the user. For another example, the group identifier in the group information may be assigned by an operator, or the identifiers of the user equipments included in the group may be obtained by the AF based on the input information of the user. For still another example, an identifier, of a user equipment in the group, input by the user may be a mobile phone number, namely, a mobile station international ISDN number (mobile station international ISDN number, MSISDN); and a type of a user equipment identifier to be obtained by the AF may be one or more of a generic public subscription identifier (generic public subscription identifier, GPSI), an MSISDN, and a subscription permanent identifier (subscription permanent identifier, SUPI). If the user equipment identifiers to be obtained by the AF include an MSISDN and a GPSI, after the AF obtains MSISDNs input by the user, the AF further needs to obtain GPSIs corresponding to the MSISDNs.

Step 802: The AF sends the group information to a UDM and/or a UDR.

The AF may directly send the group information to the UDM/UDR. Alternatively, the AF may first send the group information to a NEF, and then the NEF sends the group information to the AF. The group information sent by the AF may include the group identifier, the identifiers of the user equipments included in the group, the quantity of user equipments included in the group, and the like. In addition, the AF may further send information such as a DNN, a service type, or a QoS parameter to the UDM/UDR. The service type may be an ethernet (ethernent) type or an IP and ethernet type (briefly referred to as an IP/ethernet type or a combine (Comb) type).

When the AF sends the group information to the UDM/UDR through the NEF, the user equipment identifiers sent by the AF to the NEF are the GPSI and/or the MSISDN. The NEF sends the GPSI and/or the MSISDN to the UDM. The UDM stores correspondences between the GPSI and/or the MSISDN and SUPIs of the user equipments, so that the UDM returns the SUPIs of the user equipments to the NEF. Therefore, the NEF obtains the SUPIs of the user equipments corresponding to the GPSI and/or the MSISDN.

Step 803: The UDM and/or the UDR update/updates subscription data of the user equipments based on the group information.

Specifically, the UDM/UDR receives the GPSI and/or the MSISDN; determines the SUPIs of the user equipments based on the correspondences between the GPSI and/or the MSISDN and the SUPIs of the user equipments; and includes, in the subscription data of the SUPIs of the user equipments, the identifier of the group to which the user equipments belong, and may further include, in the subscription data of the SUPIs of the user equipments, the DNN, the service type, the QoS parameter, or the like corresponding to the group.

Optionally, IP address segment indication information may be further added to the subscription data of the first user equipment, to indicate a network side device to assign at least one IP address to the first user equipment. Further, indication information 1 that indicates that the user equipment is the first user equipment (for example, an HUE), that is, the user equipment is an access point equipment deployed in a local area network, for example, a home access point equipment in a user's home, may be further added to the subscription data of the first user equipment. The indication information 1 may be explicit indication information, or may be implicit indication information. When the indication information 1 is the implicit indication information, the user equipment identifier may indicate that the user equipment is the first user equipment. For example, when a value of the user equipment identifier is in a range from 1 to 100, it indicates that the user equipment is the first user equipment. For the first user equipment, indication information that indicates the quantity of user equipments included in the group may be further added. The indication information that indicates the quantity of user equipments may be used to determine a quantity of IP addresses included in an IP address segment assigned to the first user equipment. For example, when the quantity of user equipments is 10, the IP address segment assigned to the first user equipment includes at least 10 IP addresses; or when the quantity of user equipments is 20, the IP address segment assigned to the first user equipment includes at least 20 IP addresses.

Step 804: The first user equipment obtains a local IP address in the first network.

The local IP address of the first user equipment may be an IP address assigned by a data network (for example, a fixed network or a wireline network) to the first user equipment. For example, the first user equipment obtains a local IP address assigned by a BNG, or the first user equipment obtains a local IP address assigned by a home gateway device (for example, an optical modem).

Step 805: The first user equipment initiates an IKEv2 procedure.

Specifically, the first user equipment sends an IKEv2 message to an access gateway. The access gateway may be an ePDG, an N3IWF, a TNGF, or an HLG. When the access gateway is the N3IWF or the TNGF, the IKEv2 message includes a NAS message. The first user equipment encapsulates the IKEv2 message by using the local IP address as a data packet source address.

By using the foregoing IKEv2 procedure, a tunnel between the first user equipment and the access gateway, for example, an IPsec tunnel, is established.

Step 806: The access gateway performs authentication on the first user equipment.

When the access gateway is the N3IWF or the TNGF, the access gateway may send an N2 message to an AMF, where the N2 message may include the NAS message in the IKEv2 message. Then, the AMF completes authentication on the first user equipment through an AUSF and the UDM. This implementation is used as an example in FIG. 8A and FIG. 8B.

When the access gateway is the ePDG, the ePDG may pass through an authentication, authorization, and accounting (authentication, authorization, and accounting, AAA) server, which is not shown in the figure.

If the authentication succeeds, the following steps are then performed.

Step 807: The access gateway stores information about the first user equipment.

Specifically, the access gateway may store information such as the user equipment identifier, an N2 interface-related parameter, or an access point name (access point name, APN) of the first user equipment.

Step 808: The access gateway sends a request message to an SMF, where the request message is used to request to establish a session.

The SMF is used as an example in the embodiment shown in FIG. 8A and FIG. 8B. During actual application, a PGW-C/SMF (a network element device that converges the SMF and a PGW-C) or another network element device having a session management function may be used.

When the access gateway is the ePDG, the ePDG may send a session establishment request message (create session request) to the SMF.

When the access gateway is the N3IWF or the TNGF, the N3IWF or the TNGF receives the NAS message sent by the first user equipment, namely, a PDU session establishment request; the N3IWF or the TNGF sends the N2 message to the AMF, where the N2 message carries the PDU session establishment request; and the AMF forwards the PDU session establishment request to the SMF.

Step 809: The SMF obtains the subscription data of the first user equipment from the UDM.

The subscription data of the first user equipment may include the group identifier of the group to which the first user equipment belongs and the IP address segment, and further include the indication information (the explicit or implicit indication information) that indicates that the user equipment is the first user equipment.

Step 810a: The SMF obtains the IP address of the first user equipment, and determines another user equipment in the group based on the group identifier.

The SMF or the UPF assigns an IP address to a PDN connection or a PDU session of the first user equipment, and the SMF obtains the corresponding IP address. In addition, the SMF determines, based on the subscription data, that the user equipment is the first user equipment, and obtains the IP address segment of the first user equipment. The IP address segment may be assigned by the network side to the first user equipment based on the IP address segment indication information in the subscription data. The IP address segment includes a plurality of IP addresses, and is used by the first user equipment or the network side to assign an IP address to another user equipment in the group. For example, the SMF assigns the plurality of UE IP addresses, namely, the IP address segment, to the first user equipment based on the IP address segment indication information in the subscription data of the first user equipment and/or the quantity of user equipments in the group. For example, if IPv4 is used, an IP address and a subnet mask may be used to represent an IPv4 address segment; or if IPv6 is used, an IPv6 prefix may be used to represent an IPv6 address segment.

If the SMF stores context information of another user equipment in the group, the SMF obtains an IP address of the another user equipment. If the SMF stores context information of a plurality of other user equipments in the group, the SMF obtains an IP address of each user equipment. The IP address may be an IPv4 address or an IPv6 address, or may be an IPv4 address segment or an IPv6 prefix. The IP addresses obtained by the SMF may form an IP group. For example, if an IP address corresponding to a user equipment UE 1 in the group is IP 1, and an IP address corresponding to a user equipment UE 2 in the group is IP 2, the IP group includes IP 1 and IP 2.

Step 810b: The SMF sends the IP address and the IP address segment of the first user equipment to the UPF.

Step 810c: The SMF sends the obtained IP addresses to the access gateway, where the IP addresses include at least one of the following: the IP address assigned to the first user equipment, the IP address segment of the first user equipment, and/or the IP group including the IP addresses of the other user equipments.

When the access gateway is the ePDG, the SMF returns a session establishment response message (create session response) to the ePDG, where the session establishment response message carries the IP address assigned to the first user equipment and the IP address segment of the first user equipment. If the SMF further obtains the IP addresses of the other user equipments in the group, the session establishment response message may further carry the IP addresses of the other user equipments.

When the access gateway is the N3IWF or the TNGF, the SMF sends a NAS reply message (namely, a session establishment reply/success message), where the NAS reply message carries the IP address assigned to the first user equipment and the IP address segment of the first user equipment. If the SMF further obtains the IP addresses of the other user equipments in the group, the NAS reply message may further carry the IP addresses of the other user equipments. The NAS reply message is sent to the N3IWF or the TNGF through the AMF.

Step 811: The access gateway sends the IP addresses to the first user equipment. The access gateway sends the IP addresses to the first user equipment by encapsulating the IP addresses in the IKEv2 message or the IPsec tunnel.

When the access gateway is the ePDG, the ePDG parses the session establishment response message to obtain the IP addresses in the session establishment response message; and sends the obtained IP addresses to the first user equipment through the IKEv2 message.

When the access gateway is the N3IWF or the TNGF, the N3IWF or the TNGF obtains the NAS reply message from the AMF, where the NAS reply message carries the IP addresses; and the N3IWF or the TNGF sends the NAS reply message to the first user equipment. For example, the NAS reply message is encapsulated in the IPsec tunnel or the IKEv2 message and sent to the first user equipment.

When the access gateway is the HLG, the HLG obtains the IP addresses from a 5GC network element (for example, a 5GC control plane network element or a 5GC user plane UPF network element), and sends the IP addresses to the first user equipment by encapsulating the IP addresses in the IPsec tunnel or the IKEv2 message.

Step 812: The first user equipment stores the obtained IP addresses.

The IP addresses obtained by the first user equipment may include the IP address of the first user equipment, the IP address segment that can be assigned to the other user equipments, and an IP address of a user equipment that has accessed the mobile communication network in the group.

Optionally, the first user equipment stores a correspondence between the IP address segment and an SSID, where the SSID is a Wi-Fi access point name of the first user equipment. Another user equipment connected to the first user equipment through a Wi-Fi air interface may initiate an IP address request procedure, that is, send a DHCP message to the first user equipment.

The first user equipment identifies the DHCP message, assigns an IP address to the user equipment that sends the request, and then returns the DHCP message, where the DHCP message carries the assigned IP address. The first user equipment stores a correspondence between the assigned IP address and a user equipment identifier (for example, a MAC address of the user equipment).

In another implementation, if the first user equipment does not obtain the IP address segment, the first user equipment encapsulates a DHCP message in an outer IP header of an IPsec data packet, and sends the IPsec data packet to the access gateway. The access gateway strips off the outer IP header of the IPsec data packet, and then sends the DHCP message to the network side. For example, the SMF, the UPF, or a DHCP server on the network side receives the DHCP message, assigns an IP address to a user equipment, and sends the assigned IP address to the access gateway through a DHCP reply message. The access gateway performs IPsec encapsulation, and sends an IPsec data packet to the first user equipment. The first user equipment parses the IPsec data packet, and then sends the carried DHCP reply message to the another user equipment. Optionally, the first user equipment parses the DHCP message to obtain the IP address assigned by the network side to the another user equipment, and stores a correspondence between the IP address and a user equipment identifier (for example, a MAC address of an end equipment). Alternatively, the first user equipment obtains, from a data packet subsequently sent by the another user equipment, the IP address assigned by the network side to the another user equipment, and stores a correspondence between the IP address and a user equipment identifier (for example, a MAC address of an end equipment).

Step 813: The second user equipment in the group registers with the network.

Step 814: The second user equipment initiates a PDU session establishment procedure.

The mobile communication network establishes a PDU session for the second user equipment, and assigns an IP address to the second user equipment. The second user equipment stores the IP address corresponding to the PDU session.

Step 815: The second user equipment sends a broadcast data packet, a multicast data packet, or a unicast data packet through the PDU session.

Specifically, the broadcast data packet, the multicast data packet, or the unicast data packet is an IP data packet, where a source address is the IP address corresponding to the PDU session, namely, the IP address assigned to the second user equipment in step 814, and a destination IP address is a specific multicast IP address or a specific broadcast IP address (for example, 255.255.255.255) or an IP address of a destination equipment.

The second user equipment sends the data packet to the UPF through the PDU session. The UPF sends the data packet to the access gateway based on the destination IP address of the data packet. Then, the access gateway sends the data packet to the first user equipment. For example, the UPF determines that the UE 1 and the first user equipment belong to a same group, and therefore sends the multicast data packet, the broadcast data packet, or the unicast data packet to the access gateway through a GTP-U tunnel, so that the access gateway sends the multicast data packet, the broadcast data packet, or the unicast data packet to the first user equipment. In FIG. 8A and FIG. 8B, a UPF that serves the first user equipment and a UPF that serves the second user equipment are a same UPF. If the UPF that serves the first user equipment and the UPF that serves the second user equipment are different UPFs, the UPF that serves the second user equipment sends the data packet to the UPF that serves the first user equipment, and then the access gateway sends the data packet to the first user equipment.

Step 816: The first user equipment receives the data packet sent by the access gateway.

The first user equipment parses the data packet to obtain a source IP address in an inner IP header, namely, the IP address of the second user equipment. Specifically, the first user equipment strips off an outermost IP packet header to obtain the inner IP header. The source address of the inner IP header is the IP address of the second user equipment, and a destination address of the inner IP header is the specific multicast IP or the specific broadcast IP address or the IP address of the destination equipment.

Optionally, the first user equipment stores the IP address of the second user equipment, that is, the IP address of the second user equipment is stored in the addresses of the group. The IP address of the second user equipment may be obtained in the foregoing two manners of step 11 and step 16 to obtain an IP address of another user equipment in the group. In addition, the first user equipment sends, based on a fact that the destination address is the multicast address or the broadcast address, the data packet to another user equipment connected to the first user equipment.

In addition, the second user equipment may further receive a data packet sent by the third user equipment, where the third user equipment is a user equipment connected to the first user equipment through a Wi-Fi air interface, and the third user equipment also belongs to the foregoing group. If finding that a destination IP address of the data packet belongs to the IP group, the first user equipment sends the data packet to the access gateway. In this way, the access gateway sends the data packet to the UPF, and the UPF sends the data packet to a user equipment corresponding to the destination IP address. Specifically, the first user equipment encapsulates an outer IP header outside the data packet, where a source address of the outer IP header is the local IP address of the first user equipment, and a destination IP address of the outer IP header is an IP address of the access gateway. If the destination IP address of the data packet belongs to the IP address segment of the first user equipment, the first user equipment directly sends the data packet to the user equipment corresponding to the destination IP address.

If the destination IP address of the data packet does not belong to the group, the first user equipment replaces a source address of the data packet with the local IP address of the first user equipment, and then sends the data packet to the access gateway, that is, the first user equipment performs NAT on the data packet.

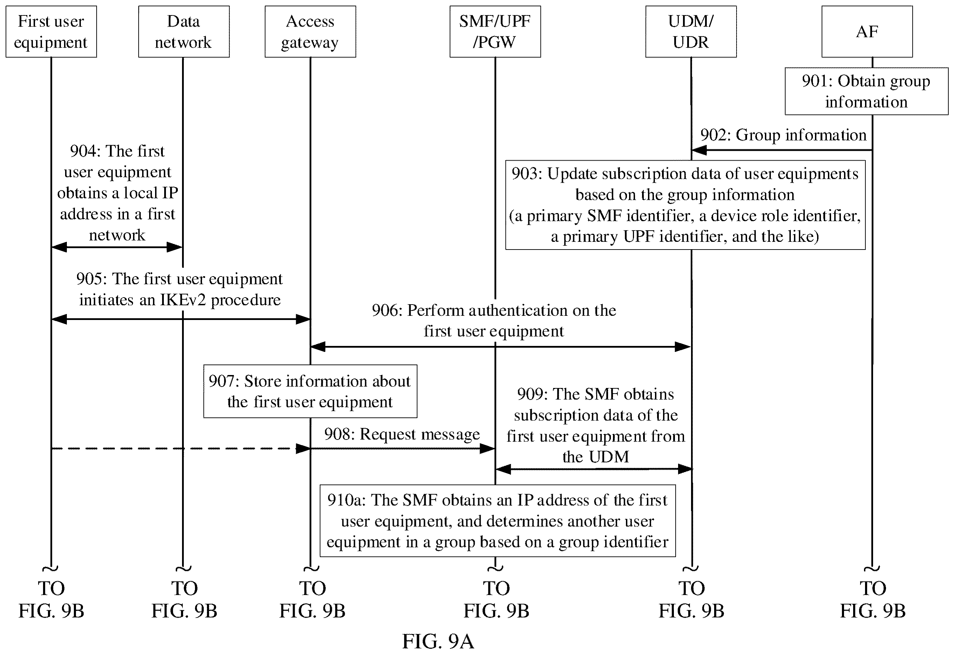

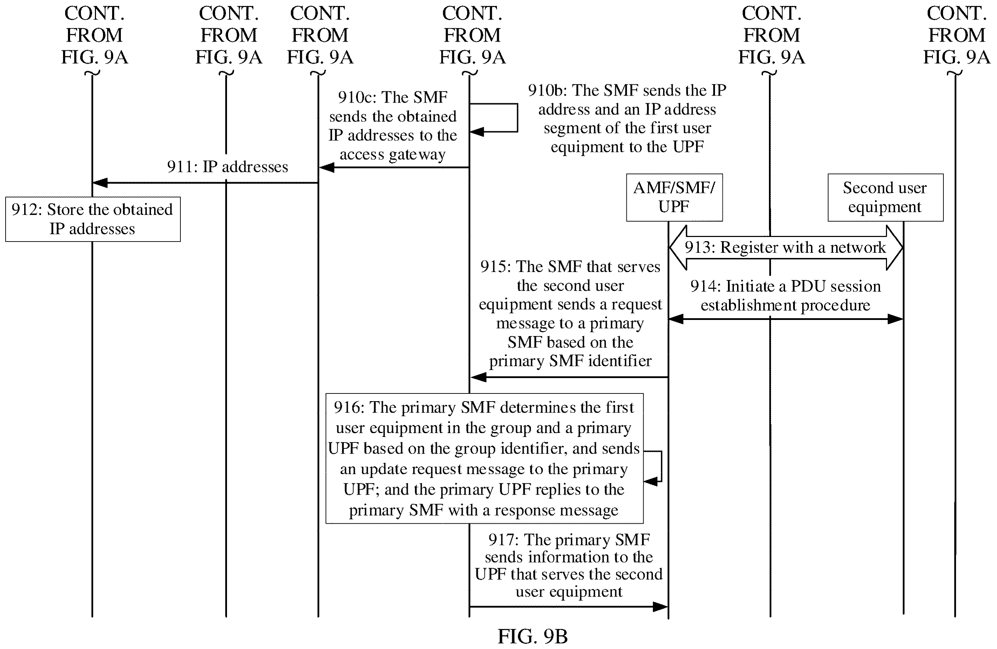

A procedure of a cross-domain communication method shown in FIG. 9A and FIG. 9B may include the following steps.

For step 901 and step 902, refer to the foregoing step 801 and step 802. Details are not described herein again.

Step 903: The UDM and/or the UDR update/updates subscription data of the user equipments based on the group information.

This step is similar to step 803. However, on a basis of step 803, a primary SMF identifier is added to the subscription data updated in step 903, and is used to indicate an identifier of the first user equipment in the group to which the user equipment belongs. Further, a device role identifier, a primary UPF identifier, and the like may be further added to the subscription data, where the device role identifier is used to indicate whether the user equipment is the first user equipment or another user equipment in the group, and the primary UPF identifier is used to indicate an identifier of a UPF that serves the first user equipment in the group to which the user equipment belongs.

When the subscription data includes a primary user equipment identifier, the indication information 1 of the first user equipment in the embodiment shown in FIG. 8A and FIG. 8B may be represented by the primary user equipment identifier, that is, the primary user equipment identifier may also be used to indicate that the user equipment is the first user equipment. If the user equipment is not a primary user equipment, the user equipment may be referred to as a secondary user equipment (secondary user equipment for short). The subscription data of the secondary user equipment may indicate, by not including the device role identifier, that the user equipment is the secondary user equipment.

In addition to the foregoing parameters, the subscription data of the primary user equipment may further include a static IP address segment, where the static IP address segment is used to indicate information about an IP address segment assigned to the primary user equipment. Optionally, a quantity of IP addresses included in the static IP address segment is determined based on the quantity of user equipments included in the group.

For example, compared with the subscription data of the first user equipment in step 803, the subscription data of the first user equipment may include the static IP address segment and the primary SMF identifier, and optionally, may further include the primary UPF identifier and the primary user equipment identifier (which is used to indicate that the user equipment is the first user equipment). Compared with the subscription data of the second user equipment in step 803, the subscription data of the second user equipment may include the primary SMF identifier, and optionally, may further include the primary UPF identifier.

Step 904 to step 912 are similar to step 804 to step 812. A difference is that the information about the IP address segment assigned to the first user equipment is determined based on the static IP address segment included in the subscription data, that is, the static IP address segment is assigned to the first user equipment.

Step 913: The second user equipment in the group registers with the network.

Step 914: The second user equipment initiates a PDU session establishment procedure.

The mobile communication network establishes a PDU session for the second user equipment, and assigns an IP address to the second user equipment. The second user equipment stores the IP address corresponding to the PDU session.

In a session establishment process, an SMF that serves the second user equipment obtains the subscription data of the second user equipment, where the subscription data of the second user equipment includes the identifier of the group to which the second user equipment belongs and the primary SMF identifier, and optionally, may further include a UPF identifier. The SMF selects a UPF for the PDU session of the second user equipment. The SMF or the UPF assigns the IP address to the PDU session.

In the example shown in FIG. 9A and FIG. 9B, the primary SMF identifier included in the subscription data of the second user equipment does not indicate the SMF that currently serves the second user equipment.

Step 915: The SMF that serves the second user equipment sends a request message to a primary SMF based on the primary SMF identifier.

The request message includes the IP address of the second user equipment and the group identifier of the group to which the second user equipment belongs, and may further include N9 GTP-U tunnel identification information assigned by the UPF that serves the second user equipment (namely, an identifier of the second UPF in the tunnel in the foregoing embodiment).

Step 916: The primary SMF determines the first user equipment in the group and a primary UPF based on the group identifier, and sends an update request message to the primary UPF; and the primary UPF replies to the primary SMF with a response message.

The update request message includes the IP address of the second user equipment.

The primary UPF assigns an N9 GTP-U tunnel identifier to the second user equipment, establishes an N9 tunnel with the UPF that serves the second user equipment, and sends the N9 GTP-U tunnel identifier to the primary SMF through the response message. The primary UPF stores the IP address of the second user equipment, and makes the IP address correspond to the assigned N9 tunnel identifier and/or the N9 GTP-U tunnel identification information assigned by the UPF that serves the second user equipment.

When the primary UPF receives a data packet, if a destination IP address of the data packet is the IP address of the second user equipment, the primary UPF forwards the data packet through the N9 tunnel corresponding to the IP address of the second user equipment.

Step 917: The primary SMF sends information to the UPF that serves the second user equipment. Specifically, the primary SMF may send a reply message to the SMF that serves the second user equipment, and then the SMF that serves the second user equipment sends the reply message to the UPF that serves the second user equipment.

The information includes IP addresses of other user equipments in the group to which the second user equipment belongs and/or the N9 tunnel identifier assigned by the primary UPF to the second user equipment. The IP addresses of the other user equipments in the group to which the second user equipment belongs include, for example, the IP address segment of the first user equipment and/or an IP address of another user equipment that accesses the mobile communication network in the group.

The UPF that serves the second user equipment stores the IP addresses, and correspondingly associates the IP addresses with the N9 tunnel identifier assigned in step 914 and/or the N9 tunnel identifier assigned by the primary UPF to the second user equipment. When receiving the data packet sent by the second user equipment, the UPF that serves the second user equipment parses the destination IP address of the data packet. When the destination IP address is consistent with a stored IP address in the group, the UPF that serves the second user equipment transmits the data packet through the N9 tunnel, that is, sends the data packet to the primary UPF.

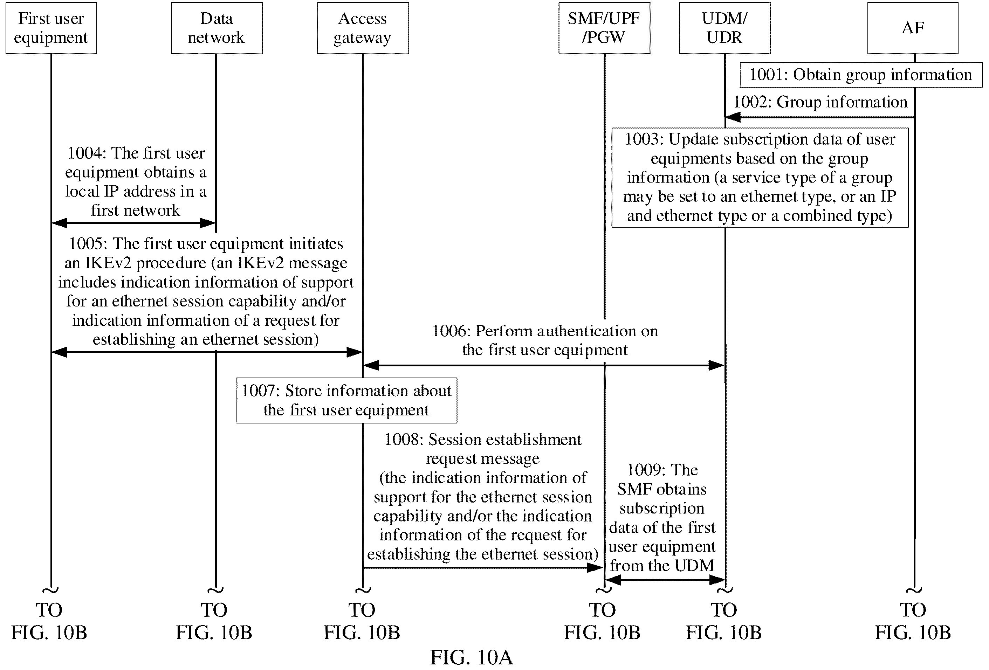

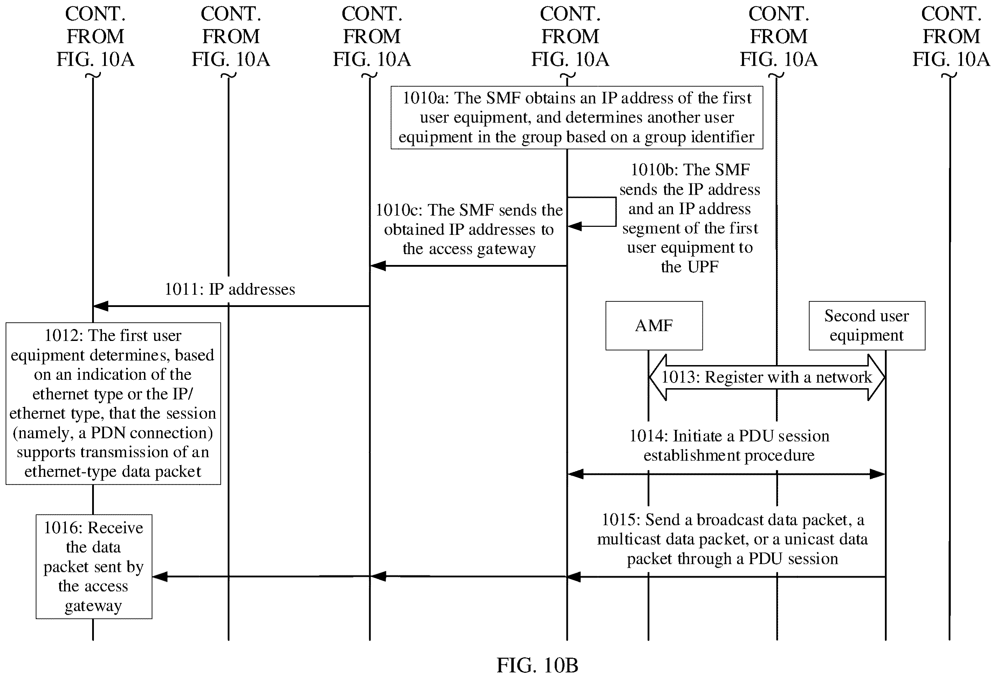

In an embodiment shown in FIG. 10A and FIG. 10B, an access gateway is an ePDG, and a procedure of a cross-domain communication method may include the following steps.

For step 1001 and step 1002, refer to the foregoing step 801 and step 802. Details are not described herein again.

Step 1003: The UDM and/or the UDR update/updates subscription data of the user equipments based on the group information.

This step is similar to step 803. However, on a basis of step 803, in the subscription data updated in step 1003, the service type of the group may be set to an ethernet (ethernent) type or an IP and ethernet type (briefly referred to as an IP/ethernet type or a combine (Comb) type).

Step 1004: The first user equipment obtains a local IP address in the first network.

Step 1005: The first user equipment initiates an IKEv2 procedure.

The first user equipment sends an IKEv2 message to the ePDG, where the IKEv2 message includes indication information of support for an ethernet session capability and/or indication information of a request for establishing an ethernet session.

For step 1006 and step 1007, refer to the foregoing step 806 and step 807. Details are not described herein again.

Step 1008: For the first user equipment that has been successfully authenticated, the ePDG sends a session establishment request message (create session request) to an SMF, where the message includes the indication information of support for the ethernet session capability and/or the indication information of the request for establishing the ethernet session.

Step 1009: The SMF obtains the subscription data of the first user equipment from the UDM.

The obtained subscription data of the group includes a service type indication of an ethernet type or an IP/ethernet type.

For step 1010a to step 1010c, refer to the foregoing step 810a to step 810c. In addition, the SMF includes, based on the subscription data and the indication that indicates that the first user equipment supports the ethernet session capability or the indication that indicates that the first user equipment requests to establish the ethernet session, indication information of an ethernet type or an IP/ethernet type in a response message sent to the access gateway.

Step 1011: The access gateway sends the IP addresses to the first user equipment.

The ePDG parses the response message returned by the session SMF, to obtain the IP addresses in the response message, and sends the obtained IP addresses to the first user equipment through the IKEv2 message. Optionally, the ePDG assigns an inner IP address and/or an ePDG IP address to the first user equipment based on the indication of the ethernet type or the IP/ethernet type.

The ePDG sends the IKEv2 message to the first user equipment, where the IKEv2 message carries the indication of the ethernet type or the IP/ethernet type. If the ePDG assigns the inner IP address and/or the ePDG IP address, the IKEv2 message further includes the assigned inner IP address and/or the assigned ePDG IP address.

Step 1012: The first user equipment determines, based on the indication of the ethernet type or the IP/ethernet type, that the session (namely, a PDN connection) supports transmission of an ethernet-type data packet.

When receiving an ethernet data packet sent by the third user equipment in the first network, the first user equipment determines, based on IP header information carried in the ethernet data packet, whether IPsec encapsulation is performed on the data packet. If IPsec encapsulation is required, an inner IP header and an outer IP header are encapsulated outside the ethernet data packet. If the first user equipment receives the inner UE IP address and/or the ePDG IP address that are/is sent by the access gateway, the first user equipment uses the received addresses as a source IP address and a destination IP address of the inner IP header; or if the first user equipment does not receive the inner UE IP address and/or the ePDG IP address that are/is sent by the access gateway, the first user equipment uses a source IP address or a destination IP address of the outer IP header as a source IP address or a destination IP address of the inner IP header.

When the access gateway receives the data packet sent by the first user equipment, the ePDG deletes the inner IP header and the outer IP header of the data packet, and sends the ethernet data packet to the UPF through the GTP-U tunnel established in step 1008 and step 1009.

For step 1013 to step 1016, refer to the foregoing step 813 to step 816 that are the same as those in Embodiment 1. Details are not described herein again.

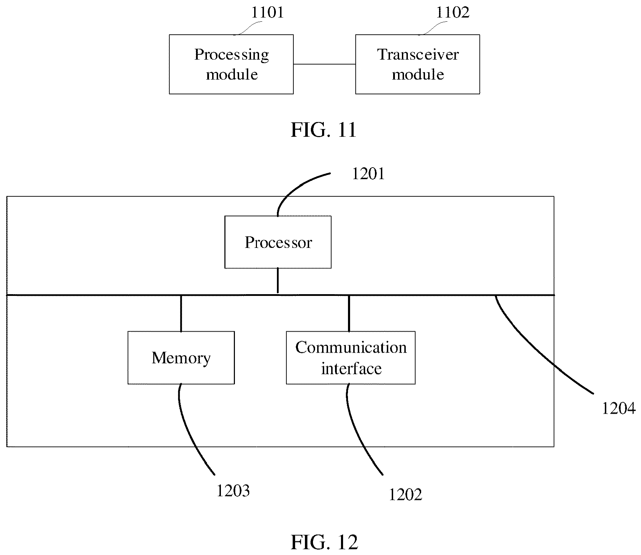

Based on a same technical concept, an embodiment of this application further provides a communication apparatus, configured to implement the method embodiments. As shown in FIG. 11, the communication apparatus includes a processing module 1101 and a transceiver module 1102. The processing module 1101 is configured to implement data processing performed by the communication apparatus. The transceiver module 1102 is configured to: receive content between the communication apparatus and another unit or network element, or send content between the communication apparatus and another unit or network element. It should be understood that the processing module 1101 in this embodiment of this application may be implemented by a processor or a processor-related circuit component (or referred to as a processing circuit), and the transceiver module 1102 may be implemented by a receiver, a receiver-related circuit component, a transmitter, or a transmitter-related circuit component.

For example, the communication apparatus may be a communication apparatus device, or may be a chip used in a communication apparatus device or another combined device or component with a function of the communication apparatus device.

The communication apparatus may be the first SMF, the first user equipment, the first UPF, the second SMF, or the second UPF in the foregoing embodiments.

When the communication apparatus is the SMF, the processing module 1101 is configured to: determine a first user plane function UPF network element based on a group identifier of a group to which a target user equipment belongs, where the first UPF is a UPF that serves a first user equipment, and the first user equipment is an access point user equipment in the group; and send an IP address of the target user equipment and/or the group identifier to the first UPF through the transceiver module 1102.

In addition, the foregoing modules may be further configured to support another process performed by the SMF in the embodiments shown in FIG. 7 to FIG. 10B. For beneficial effects, refer to the foregoing descriptions. Details are not described herein again.

When the communication apparatus is the first user equipment, the processing module 1101 is configured to: receive a first data packet through the transceiver module 1102; and if a destination IP address of the first data packet is an IP address of a second user equipment, send the first data packet to an access gateway, where the access gateway is used for access to a mobile core network, and the second user equipment and the first user equipment belong to a same group; or if a destination IP address of the first data packet is an IP address of a third user equipment, send the first data packet to the third user equipment, where the third user equipment and the first user equipment belong to a same group, and the third user equipment is connected to the first user equipment.

In addition, the foregoing modules may be further configured to support another process performed by the first user equipment in the embodiments shown in FIG. 7 to FIG. 10B. For beneficial effects, refer to the foregoing descriptions. Details are not described herein again.

FIG. 12 is a diagram of another communication device according to an embodiment of this application. The communication device includes a processor 1201, a communication interface 1202, and a memory 1203. The processor 1201, the communication interface 1202, and the memory 1203 may be connected to each other through a bus 1204. The bus 1204 may be a peripheral component interconnect (peripheral component interconnect, PCI) bus, an extended industry standard architecture (extended industry standard architecture, EISA) bus, or the like. The bus 1204 may be classified into an address bus, a data bus, a control bus, and the like. For ease of representation, only one line is used in FIG. 12 for representation, but it does not indicate that there is only one bus or only one type of bus. The processor 1201 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 1203 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

For example, the communication device may be the first SMF, the first user equipment, the first UPF, the second SMF, and the second UPF in FIG. 7 to FIG. 10B.

The processor 1201 is configured to implement a data processing operation of the communication device. The communication interface 1202 is configured to implement a receiving operation and a sending operation of the communication device.

When the communication device is the first SMF, the processor 1201 is configured to: determine a first user plane function UPF network element based on a group identifier of a group to which a target user equipment belongs, where the first UPF is a UPF that serves a first user equipment, and the first user equipment is an access point user equipment in the group; and send an IP address of the target user equipment and/or the group identifier to the first UPF through the communication interface 1202.

In addition, the foregoing components may be further configured to support another process performed by the first SMF in the embodiments shown in FIG. 7 to FIG. 10B. For beneficial effects, refer to the foregoing descriptions. Details are not described herein again.

When the communication device is the first user equipment, the processor 1201 is configured to: receive a first data packet through the communication interface 1202; and if a destination IP address of the first data packet is an IP address of a second user equipment, send the first data packet to an access gateway, where the access gateway is used for access to a mobile core network, and the second user equipment and the first user equipment belong to a same group; or if a destination IP address of the first data packet is an IP address of a third user equipment, send the first data packet to the third user equipment, where the third user equipment and the first user equipment belong to a same group, and the third user equipment is connected to the first user equipment.

In addition, the foregoing components may be further configured to support another process performed by the first user equipment in the embodiments shown in FIG. 7 to FIG. 10B. For beneficial effects, refer to the foregoing descriptions. Details are not described herein again.

Based on a same technical concept, an embodiment of this application further provides a communication system. The communication system includes the first SMF and the first user equipment in the foregoing embodiments, and may further include one or more of the first UPF, the second UPF, or the second SMF.

Based on a same technical concept, an embodiment of this application further provides a computer-readable storage medium. The computer-readable storage medium stores computer-readable instructions. When the computer-readable instructions are run on a computer, the method according to any one of the foregoing possible implementations is performed.

An embodiment of this application provides a computer program product including instructions. When the instructions are run on a computer, the foregoing method embodiments are performed.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in descriptions of this application, terms such as "first" and "second" are merely used for distinguishing and description, but shall not be understood as indicating or implying relative importance, or shall not be understood as indicating or implying a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wireline or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A cross-domain communication method, wherein the method comprises:
determining, by a first session management function SMF network element, a first user plane function UPF network element based on a group identifier of a group to which a target user equipment belongs, wherein the first UPF is a UPF that serves a first user equipment, and the first user equipment is an access point user equipment in the group; and
sending, by the first SMF, an IP address of the target user equipment and/or the group identifier to the first UPF.

2. The method according to claim 1, wherein the target user equipment is the first user equipment, and the method further comprises:
obtaining, by the first SMF, subscription data of the first user equipment, wherein the subscription data comprises one or more of the following information:
the group identifier;
indication information of the access point user equipment, wherein the indication information of the access point user equipment indicates that the target user equipment is the access point user equipment;
at least one IP address corresponding to the first user equipment, wherein the at least one IP address is an IP address to be assigned to a third user equipment, and the third user equipment is a user equipment that accesses the first user equipment;
an indication to assign at least one IP address to the first user equipment, wherein the indication to assign the at least one IP address to the first user equipment indicates the first SMF or another network device to assign the at least one IP address to the first user equipment, the at least one IP address is an IP address to be assigned to a third user equipment, and the third user equipment is a user equipment that accesses the first user equipment; or
a QoS parameter corresponding to the group identifier.

3. The method according to claim 2, wherein the method further comprises:
sending, by the first SMF, a first message to the first user equipment, wherein the first message comprises the at least one IP address assigned to the first user equipment and/or an IP address of another user equipment in the group.

4. The method according to any one of claims 1 to 3, wherein when a second UPF connected to the target user equipment is different from the first UPF, the method further comprises:
establishing, by the first UPF, a general packet radio service tunnelling protocol for the user plane GTP-U tunnel between the first UPF and the second UPF, and storing, by the first UPF, a correspondence between the IP address of the target user equipment and the GTP-U tunnel.

5. The method according to any one of claims 1 to 4, wherein the method further comprises:
receiving, by the first SMF, the group identifier of the group to which the target user equipment belongs and/or the IP address of the target user equipment, and an identifier of the second UPF in the tunnel that are sent by a second SMF; and
sending, by the first SMF, the IP address of the target user equipment and/or the group identifier to the first UPF comprises:
sending, by the first SMF to the first UPF, the group identifier and/or the IP address of the target user equipment, and the identifier of the second UPF in the tunnel.

6. The method according to any one of claims 1 to 3, wherein the method further comprises:
obtaining, by the first SMF, an identifier of the first UPF in a tunnel; and
sending, by the first SMF, the second tunnel identifier and the IP address of the another user equipment in the group to a second SMF.

7. The method according to claim 6, wherein the method further comprises:
sending, by the second SMF, the identifier of the first UPF in the tunnel and the IP address of the another user equipment in the group to the second UPF; and
establishing, by the second UPF, a GTP-U tunnel between the second UPF and the first UPF based on the identifier of the first UPF in the tunnel, and storing, by the second UPF, a correspondence between the GTP-U tunnel and an IP address of a user equipment in the group.

8. A cross-domain communication method, wherein the method comprises:
receiving, by a first user equipment, a first data packet; and
if a destination IP address of the first data packet is an IP address of a second user equipment, sending, by the first user equipment, the first data packet to an access gateway, wherein the access gateway is used for access to a mobile core network, and the second user equipment and the first user equipment belong to a same group; or
if a destination IP address of the first data packet is an IP address of a third user equipment, sending, by the first user equipment, the first data packet to the third user equipment, wherein the third user equipment and the first user equipment belong to a same group.

9. The method according to claim 8, wherein before receiving, by the first user equipment, the first data packet, the method further comprises:
obtaining, by the first user equipment, the IP address of the second user equipment; and/or
obtaining, by the first user equipment, at least one IP address assigned by the mobile core network, wherein the IP address of the third user equipment is among the at least one IP address.

10. The method according to claim 9, wherein obtaining, by the first user equipment, the IP address of the second user equipment comprises:
receiving, by the first user equipment, first information sent by the access gateway, wherein the first information comprises the IP address of the second user equipment; or
receiving, by the first user equipment, a second data packet sent by the access gateway, wherein a source address of the second data packet is the IP address of the second user equipment.

11. The method according to any one of claims 8 to 10, wherein the method further comprises:
if the destination IP address of the first data packet is not an IP address of a user equipment in the group, modifying, by the first user equipment, a source IP address of the first data packet to a local IP address of the first user equipment, and sending the modified first data packet to a data network.

12. The method according to any one of claims 8 to 11, wherein the method further comprises:
sending, by the first user equipment, capability indication information and/or a session establishment request to the access gateway, wherein
the capability indication information indicates that the first user equipment supports an IP-type service session, an ethernet-type service session, or an IP and ethernet-type service session, or indicates that the first user equipment is an access point user equipment; and
the session establishment request is used to request to establish an IP-type service session, an ethernet-type service session, or an IP and ethernet-type service session.

13. A cross-domain communication method, wherein the method comprises:
determining, by a first session management function SMF network element, a first user plane function UPF network element based on a group identifier of a group to which a target user equipment belongs, wherein the first UPF is a UPF connected to a first user equipment, and the first user equipment is an access point user equipment in the group;
sending, by the first SMF, an IP address of the target user equipment and/or the group identifier to the first UPF; and
establishing, by the first UPF, a GTP-U tunnel between the first UPF and a second UPF, and storing a correspondence between the IP address of the target user equipment and the GTP-U tunnel, wherein the second UPF is a UPF that serves the target user equipment.

14. The method according to claim 13, wherein the method further comprises:
receiving, by the first UPF, a first data packet from the first user equipment; and
when a destination IP address of the first data packet is the IP address of the target user equipment, sending, by the first UPF, the first data packet through the tunnel corresponding to the IP address of the target user equipment.

15. The method according to claim 13 or 14, wherein the method further comprises:
obtaining, by the second UPF, an IP address of a user equipment in the group, and establishing a correspondence between the IP address of the user equipment in the group and the tunnel; and
receiving, by the second UPF, a second data packet sent by the target user equipment, and if a destination IP address of the second data packet is the IP address of the user equipment that belongs to the group, sending, by the second UPF, the second data packet through the tunnel based on the correspondence.

16. The method according to any one of claims 13 to 15, wherein the method further comprises:
obtaining, by the first SMF, an identifier of the first UPF in the tunnel;
sending, by the first SMF, the identifier of the first UPF in the tunnel, the group identifier, and/or an IP address of another user equipment in the group to the second SMF;
sending, by the second SMF, the identifier of the first UPF in the tunnel, the group identifier, and/or the IP address of the another user equipment in the group to the second UPF; and
establishing, by the second UPF, the GTP-U tunnel between the second UPF and the first UPF based on the identifier of the first UPF in the tunnel, and storing, by the second UPF, a correspondence between the GTP-U tunnel and the group identifier and/or the IP address of the another user equipment in the group.

17. A communication apparatus, comprising a processor, and a memory and a communication interface that are separately coupled to the processor, wherein the communication interface is configured to communicate with another device; and the processor is configured to: run instructions or a program in the memory, to perform the method according to any one of claims 1 to 7 through the communication interface.

18. A communication apparatus, comprising a processor, and a memory and a communication interface that are separately coupled to the processor, wherein the communication interface is configured to communicate with another device; and the processor is configured to: run instructions or a program in the memory, to perform the method according to any one of claims 8 to 12 through the communication interface.

19. A communication apparatus, comprising a processor, and a memory and a communication interface that are separately coupled to the processor, wherein the communication interface is configured to communicate with another device; and the processor is configured to: run instructions or a program in the memory, to perform the method according to any one of claims 13 to 16 through the communication interface.

20. A communication system, wherein the communication system comprises the communication apparatus according to claim 17 and the communication apparatus according to claim 18.

21. A computer-readable storage medium, wherein the computer-readable storage medium stores instructions; and when the instructions are run on a computer, the computer is caused to perform the method according to any one of claims 1 to 7, the method according to any one of claims 8 to 12, or the method according to any one of claims 13 to 16.

22. A computer program product comprising instructions, wherein when the instructions are run on a computer, the computer is caused to perform the method according to any one of claims 1 to 7, the method according to any one of claims 8 to 12, or the method according to any one of claims 13 to 16.
